# FASCICULE DE BREVET EUROPEEN

(11) **EP 3 696 089 B1**
(45) Date de publication et mention de la délivrance du brevet: **15.12.2021**
(21) Numéro de dépôt: 20156739.3
(22) Date de dépôt: 11.02.2020
(51) Int. Cl.: B64D 27/26, B64C 3/32

(54) **ENSEMBLE POUR AÉRONEF COMPRENANT UN MAT D'ACCROCHAGE, UNE AILE ET DEUX SYSTÈMES DE FIXATION FIXANT LE MAT D'ACCROCHAGE A L'AILE**
BAUGRUPPE FÜR LUFTFAHRZEUG, BEINHALTEND EINEN TRAGFLÜGELPYLON, EINEN FLÜGEL UND ZWEI HALTERUNGSSYSTEME ZUR BEFESTIGUNG DES TRAGFLÜGELPYLONS MIT DEM FLÜGEL
ASSEMBLY FOR AIRCRAFT COMPRISING A MOUNTING STRUT, A WING AND TWO ATTACHMENT SYSTEMS FIXING THE MOUNTING STRUT TO THE WING

(30) Priorité: 18.02.2019 FR 1901613
(43) Date de publication de la demande: 19.08.2020
(73) Titulaire: AIRBUS OPERATIONS, 31060 Toulouse Cedex 9 (FR)
(72) Inventeur: PETRISSANS, Isabelle, 31270 CUGNAUX (FR); BERJOT, Michael, 31770 COLOMIERS (FR)
(74) Mandataire: Cabinet Le Guen Maillet

(56) Documents cités:
- EP-A1- 2 500 268
- WO-A1-2008/132077
- WO-A1-2008/142098
- US-A1- 2008 217 502

## Description

### DOMAINE TECHNIQUE

La présente invention concerne un ensemble pour un aéronef, où ledit ensemble comporte un mât d'accrochage, une aile et deux systèmes de fixation fixant le mât d'accrochage à l'aile, ainsi qu'un aéronef comportant au moins un tel ensemble.

### ETAT DE LA TECHNIQUE ANTERIEURE

Sur les aéronefs existants, les moteurs tels que les turboréacteurs sont suspendus en dessous de la voilure par des dispositifs d'accrochage complexes, également appelés « EMS » (de l'anglais « Engine Mounting Structure »), ou encore mâts d'accrochage. Les mâts d'accrochage habituellement employés présentent une structure primaire, également dite structure rigide, souvent réalisée sous forme d'un caisson, c'est-à-dire réalisée par l'assemblage de longerons inférieurs et supérieurs raccordés entre eux par une pluralité de nervures transversales de renfort situées à l'intérieur du caisson et à ses extrémités. Les longerons sont agencés en faces inférieure et supérieure, tandis que des panneaux latéraux ferment le caisson en faces latérales. De plus, le mât d'accrochage est agencé en partie supérieure du moteur, entre ce dernier et le caisson de voilure. Cette position horaire est dite « à 12h ».

De façon connue, la structure primaire de ces mâts est conçue pour permettre la transmission à la voilure des efforts statiques et dynamiques engendrés par les moteurs, tels que le poids, la poussée, ou encore les différents efforts dynamiques, notamment en cas d'atterrissage dynamique, etc.

Dans les mâts d'accrochage connus de l'état de la technique, la transmission des efforts entre sa structure primaire et le caisson de voilure est classiquement assurée par un jeu d'attaches comprenant une attache avant, une attache arrière, ainsi qu'une attache intermédiaire, cette dernière étant notamment destinée à reprendre les efforts de poussée générés par le moteur. Ces attaches sont classiquement interposées verticalement entre le caisson de voilure et la structure primaire du mât d'accrochage.

Sur les moteurs récents, le diamètre est de plus en plus élevé.

Par conséquent, avec une garde au sol qui est déterminée de manière à rester acceptable du point de vue sécuritaire, l'espace restant entre l'élément de voilure et le moteur s'avère de plus en plus restreint. De ce fait, il devient difficile d'implanter le mât d'accrochage ainsi que les différentes attaches voilure dans cet espace vertical restant, usuellement dédié à cette implantation. Cette difficulté est d'autant plus élevée que les efforts qui transitent sont également d'intensités élevées, et requièrent des dimensionnements appropriés pour le caisson de voilure et la structure primaire. En effet, ces derniers doivent présenter des dimensions suffisantes pour apporter une résistance mécanique capable de supporter le passage des efforts du moteur vers l'élément de voilure, avec une faible déformée sous contrainte dans le but de ne pas dégrader les performances aérodynamiques du système propulsif.

Dans l'état de la technique, de multiples solutions ont été proposées pour rapprocher le moteur au plus près de l'élément de voilure auquel il est suspendu, et ce dans le but de conserver la garde au sol requise.

Néanmoins, ces solutions doivent être améliorées en permanence pour s'adapter aux diamètres de soufflante toujours plus élevés, retenus pour satisfaire les besoins en taux de dilution.

Les documents US-A-2008/217502, WO-A-2008/132077, WO-A-2008/142098 et EP-A-2 500 268 divulguent des ensembles pour aéronef de l'état de la technique.

### EXPOSE DE L'INVENTION

Un objet de la présente invention est de proposer un ensemble pour un aéronef qui comporte un mât d'accrochage, une aile et deux systèmes de fixation fixant le mât d'accrochage à l'aile, où les deux systèmes de fixation sont peu encombrants.

A cet effet, est proposé un ensemble pour un aéronef, ledit ensemble comportant :
- une aile comprenant des longerons inférieurs,
- un mât d'accrochage agencé sous l'aile et comportant une structure primaire en forme de caisson primaire présentant un longeron supérieur et deux panneaux latéraux disposés symétriquement de part et d'autre d'un plan médian XZ,
- un système de fixation avant et un système de fixation arrière, ledit ensemble étant caractérisé en ce que ledit système de fixation avant comporte :
   - une poutre avant fixée au longeron inférieur, où la poutre avant est percée d'un alésage principal avant orienté verticalement, où la poutre avant est percée de deux perçages secondaires avant orientés parallèlement à une direction longitudinale X et disposés symétriquement de part et d'autre du plan médian XZ, où de chaque perçage secondaire avant, s'étend au moins un passage traversant avant orienté verticalement,
   - un alésage supérieur avant traversant le longeron supérieur et orienté verticalement et coaxial avec l'alésage principal avant,
   - une goupille de cisaillement avant positionnée dans l'alésage supérieur avant et dans l'alésage principal avant,
   - pour chaque passage traversant avant, un alésage secondaire avant traversant le longeron supérieur et orienté verticalement et coaxial avec le passage traversant avant,
   - deux équerres disposées symétriquement de part et d'autre du plan médian XZ, où chaque équerre comporte une base et une palette solidaire de la base, où la base présente une face supérieure qui s'applique sous le longeron supérieur, où pour chaque passage traversant avant, la base est percée d'un perçage la traversant et orienté verticalement, et où chaque perçage débouche au niveau de la face supérieure et est coaxial avec le passage traversant avant, où la palette est fixée contre et à l'extérieur d'un panneau latéral, et
   - pour chaque passage traversant avant, un boulon avant avec un écrou qui loge dans le perçage secondaire et une vis qui traverse successivement le perçage, l'alésage secondaire et le passage traversant avant pour se visser dans l'écrou, et
en ce que ledit système de fixation arrière comporte :
- une poutre arrière fixée au longeron inférieur, où la poutre arrière est percée d'un alésage principal arrière orienté verticalement, où la poutre arrière est percée de deux perçages secondaires arrière orientés parallèlement à la direction longitudinale X et disposés symétriquement de part et d'autre du plan médian XZ, où de chaque perçage secondaire arrière s'étend au moins un passage traversant arrière orienté verticalement,
- un alésage supérieur arrière qui traverse le longeron supérieur et orienté verticalement et coaxial avec l'alésage principal arrière,
- une goupille de cisaillement arrière positionnée dans l'alésage supérieur arrière et dans l'alésage principal arrière,
- pour chaque passage traversant arrière, un alésage secondaire arrière traversant le longeron supérieur et orienté verticalement et coaxial avec le passage traversant arrière,
- pour chaque passage traversant arrière, un boulon arrière avec un écrou qui loge dans le perçage secondaire arrière et une vis qui traverse successivement l'alésage secondaire arrière et le passage traversant arrière pour se visser dans l'écrou.

Un tel ensemble permet d'approcher au plus près le mât d'accrochage de l'aile. Avantageusement, chaque perçage secondaire présente une section circulaire et chaque écrou présente un profil en D.

Avantageusement, la structure primaire comporte une nervure de fermeture arrière, chaque alésage secondaire arrière traverse la nervure de fermeture arrière, et l'alésage supérieur arrière traverse la nervure de fermeture arrière.

L'invention propose également un aéronef comportant au moins un ensemble selon l'une des revendications précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] montre une vue de côté d'un aéronef comportant un ensemble selon l'invention,
[Fig. 2] montre une vue éclatée en perspective d'un ensemble selon l'invention,
[Fig. 3] montre une vue en perspective de l'ensemble selon l'invention en phase de montage,
[Fig. 4] montre une coupe selon le plan IV de la Fig. 2 de l'ensemble selon l'invention, et
[Fig. 5] montre une coupe selon le plan V de la Fig. 2 de l'ensemble selon l'invention.

### EXPOSE DETAILLE DE MODES DE REALISATION

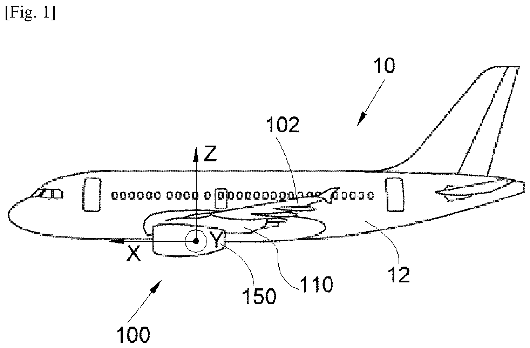

La Fig. 1 montre un aéronef 10 comprenant un fuselage 12 sur lequel sont fixées deux ailes 102 (une seule étant visible sur la Fig. 1), chaque aile 102 faisant partie intégrante d'un ensemble 100 selon l'invention.

L'ensemble 100 supporte un moteur 150 en particulier à double flux et à double corps, tel qu'un turboréacteur. L'ensemble 100 comprend non seulement l'aile 102, mais également un mât d'accrochage 110 agencé sous l'aile 102 et sous lequel est suspendu le moteur 150 et qui est interposé entre l'aile 102 et le moteur 150.

Dans toute la description qui va suivre, et par convention, la direction X correspond à la direction longitudinale de l'ensemble 100 qui est également assimilable à la direction longitudinale du moteur 150, cette direction longitudinale X étant parallèle à un axe longitudinal du moteur 150. D'autre part, la direction Y correspond à la direction orientée transversalement par rapport à l'ensemble 100, également assimilable à la direction transversale du moteur 150.

Enfin, la direction Z correspond à la direction verticale ou de la hauteur, ces trois directions X, Y et Z étant orthogonales entre elles.

Les termes « avant » et « arrière » sont à considérer par rapport à une direction d'avancement de l'aéronef 10 rencontrée suite à la poussée exercée par les moteurs 150, cette direction étant globalement orientée selon la direction longitudinale X.

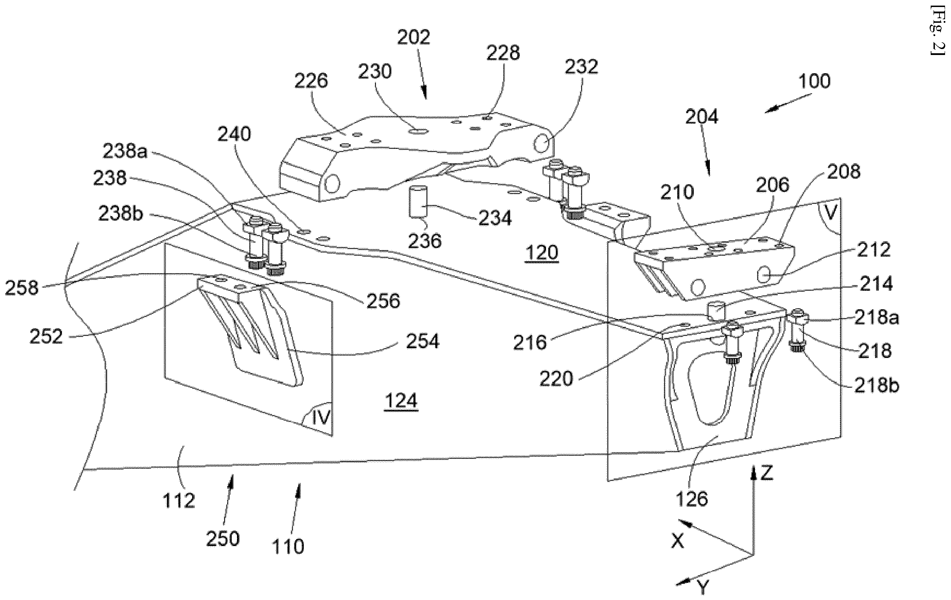

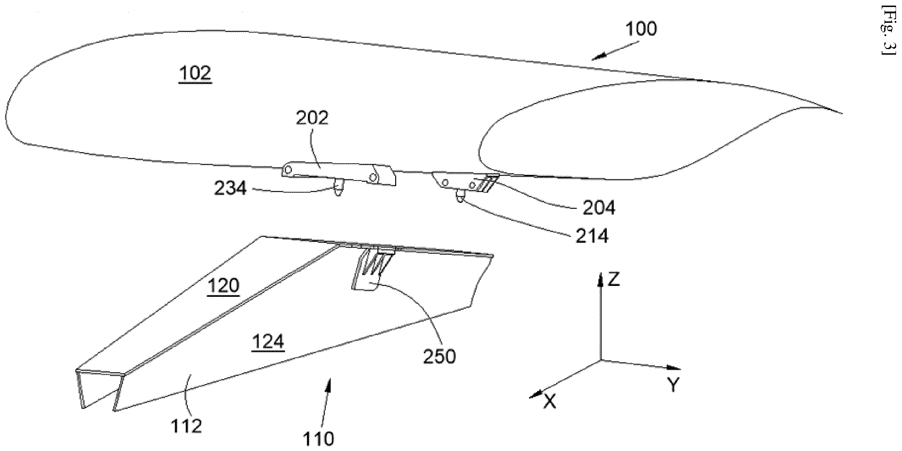

La Fig. 2 représente l'ensemble 100 sans l'aile 102 et sous lequel est suspendu le moteur 150. La Fig. 3 montre l'ensemble 100 en cours d'assemblage.

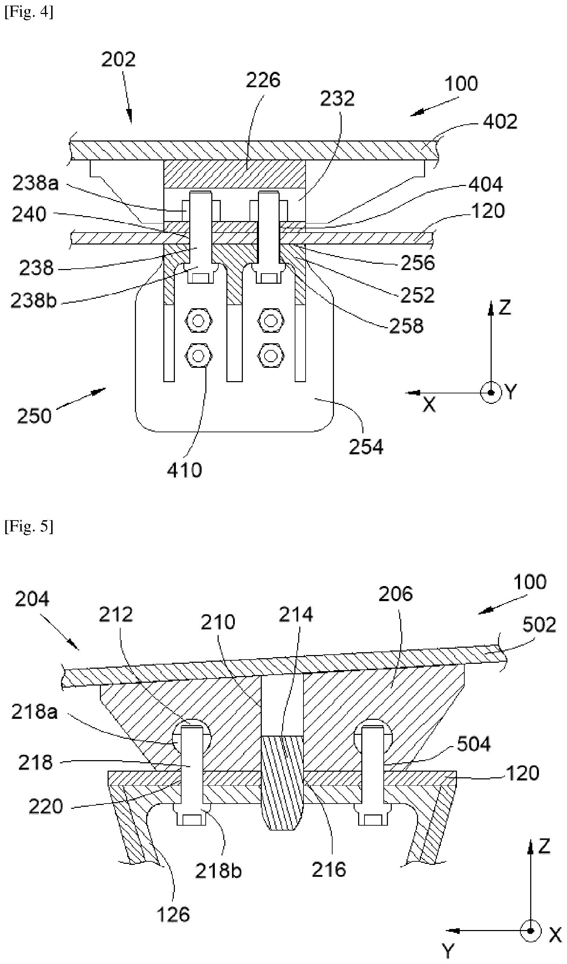

La Fig. 4 et la Fig. 5 montrent des coupes de l'ensemble 100 selon les plans IV et V de la Fig. 2.

L'aile 102 comporte un caisson de voilure s'étendant selon une direction d'envergure de l'aile et qui forme la structure de l'aile 102 autour de laquelle est fixée la peau de l'aile 102 formant la surface aérodynamique.

Le caisson de voilure est classiquement formé par des longerons, en particulier des longerons inférieurs 402 et 502 représentés sur la Fig. 4 et la Fig. 5. Le caisson de voilure comporte également des nervures de renfort fixées entre les longerons et logées à l'intérieur du caisson de voilure.

L'ensemble 100 comporte également le mât d'accrochage 110 qui comprend une structure primaire 112 en forme de caisson, dit caisson primaire.

La structure primaire 112, ou structure rigide, permet la transmission au caisson de voilure des efforts statiques et dynamiques engendrés par le moteur 150. Le caisson primaire formant la structure primaire 112 s'étend selon la direction longitudinale X. Le caisson primaire présente une conception classique, et il est délimité en particulier vers le haut par un longeron supérieur 120 et latéralement par des panneaux latéraux 124 disposés symétriquement de part et d'autre d'un plan médian XZ perpendiculaire au longeron supérieur 120.

Le longeron supérieur 120 se situe au moins en partie sous le caisson de voilure.

En outre, le caisson primaire formant la structure primaire 112 est équipé de nervures transversales de renfort, de préférence agencées sensiblement dans des plans YZ et réparties selon la direction longitudinale X. En particulier, il y a une nervure transversale de renfort fermant l'arrière du caisson primaire, dite nervure de fermeture arrière 126.

La fixation du moteur 150 sur le caisson primaire s'effectue d'une manière conventionnelle, qui ne sera pas détaillée dans le cadre de cette invention. Elle est réalisée par des attaches moteur classiques, connues de l'homme du métier.

L'ensemble 100 comporte également deux systèmes de fixation 202 et 204, à savoir un système de fixation avant 202 et un système de fixation arrière 204 qui assurent la fixation du mât d'accrochage 110 au caisson de voilure et plus particulièrement aux longerons inférieurs 402 et 502 de l'aile 102.

Le système de fixation arrière 204 comporte une poutre arrière 206 qui est fixée au longeron inférieur 502 par des éléments de fixation du type éléments de visserie, à cette fin, la poutre arrière 206 est traversée d'alésages de fixation arrière 208 qui permettent le passage des axes des éléments de fixation et qui sont orientés verticalement.

La poutre arrière 206 est percée d'un alésage principal arrière 210 qui est également orienté verticalement.

La poutre arrière 206 comporte également deux perçages secondaires arrière 212, qui sont orientés globalement parallèlement à la direction longitudinale X et qui sont disposés symétriquement de part et d'autre du plan médian XZ. De chaque perçage secondaire arrière 212, s'étend au moins un passage traversant arrière 504 qui est orienté verticalement et débouche sur le longeron supérieur 120. Chaque passage traversant arrière 504 est ici cylindrique.

Le système de fixation arrière 204 comporte également un alésage supérieur arrière 216 qui traverse le longeron supérieur 120 du mât d'accrochage 110 et qui est orienté verticalement. L'alésage supérieur arrière 216 est coaxial avec l'alésage principal arrière 210.

Dans le mode de réalisation de l'invention présenté ici, l'alésage supérieur arrière 216 traverse également la nervure de fermeture arrière 126.

Le système de fixation arrière 204 comporte également une goupille de cisaillement arrière 214 qui est positionnée dans l'alésage supérieur arrière 216 et dans l'alésage principal arrière 210. Ainsi, la poussée moteur ainsi que le moment en Z sont repris par la goupille de cisaillement arrière 214.

Le système de fixation arrière 204 comporte également, pour chaque passage traversant arrière 504, un alésage secondaire arrière 220 qui traverse le longeron supérieur 120 du mât d'accrochage 110 et qui est orienté verticalement. Chaque alésage secondaire arrière 220 est coaxial avec le passage traversant arrière 504. Dans le mode de réalisation de l'invention présenté ici, chaque alésage secondaire arrière 220 traverse également la nervure de fermeture arrière 126.

Le système de fixation arrière 204 comporte également, pour chaque passage traversant arrière 504, un boulon arrière 218 avec un écrou 218a qui loge dans le perçage secondaire arrière 212 et une vis 218b qui traverse successivement l'alésage secondaire arrière 220 et le passage traversant arrière 504 pour se visser dans l'écrou 218a en prenant en sandwich le longeron supérieur 120, la poutre arrière 206 et la nervure de fermeture arrière 126 lorsqu'elle est présente.

Dans le mode de réalisation de l'invention présenté ici, chaque perçage secondaire arrière 212 présente une section circulaire et chaque écrou 218a présente un profil en D.

Dans un autre mode de réalisation, chaque perçage secondaire arrière 212 peut présenter une section rectangulaire et chaque écrou 218a présente alors un profil classique hexagonal ou carré. Le système de fixation avant 202 comporte une poutre avant 226 qui est fixée au longeron inférieur 402 par des éléments de fixation du type éléments de visserie, à cette fin, la poutre avant 226 est traversée d'alésages de fixation avant 228 qui permettent le passage des axes des éléments de fixation et qui sont orientés verticalement.

La poutre avant 226 est percée d'un alésage principal avant 230 qui est également orienté verticalement.

La poutre avant 226 comporte également deux perçages secondaires avant 232, qui sont orientés globalement parallèlement à la direction longitudinale X et qui sont disposés symétriquement de part et d'autre d'un plan médian XZ. De chaque perçage secondaire avant 232, s'étend au moins un passage traversant avant 404, ici au nombre de deux, où chaque passage traversant avant 404 est orienté verticalement et débouche sur le longeron supérieur 120. Chaque passage traversant avant 404 est ici cylindrique.

Le système de fixation avant 202 comporte également un alésage supérieur avant 236 qui traverse le longeron supérieur 120 du mât d'accrochage 110 et qui est orienté verticalement. L'alésage supérieur avant 236 est coaxial avec l'alésage principal avant 230.

Le système de fixation avant 202 comporte également une goupille de cisaillement avant 234 qui est positionnée dans l'alésage supérieur avant 236 et dans l'alésage principal avant 230. Ainsi, la poussée moteur ainsi que le moment en Z sont repris par la goupille de cisaillement avant 234.

Le système de fixation avant 202 comporte également, pour chaque passage traversant avant 404, un alésage secondaire avant 240 qui traverse le longeron supérieur 120 du mât d'accrochage 110 et qui est orienté verticalement. Chaque alésage secondaire avant 240 est coaxial avec le passage traversant avant 404.

Le système de fixation avant 202 comporte également deux équerres 250 disposées symétriquement de part et d'autre du plan médian XZ. Chaque équerre 250 comporte une base 252 et une palette 254 solidaire de la base 252.

La base 252 présente une face supérieure 256 qui s'applique sous le longeron supérieur 120 et, pour chaque passage traversant avant 404, la base 252 est percée d'un perçage 258 qui la traverse et est orienté verticalement. Chaque perçage 258 débouche au niveau de la face supérieure 256 et est coaxial avec le passage traversant avant 404.

La palette 254 s'appuie contre et à l'extérieur d'un panneau latéral 124. La palette 254 est fixée audit panneau latéral 124 par des éléments de fixation du type éléments de visserie, à cette fin, la palette 254 et le panneau latéral 124 sont traversés d'alésages qui permettent le passage des axes des éléments de fixation et qui sont orientés transversalement perpendiculairement au panneau latéral 124. Les éléments de fixation sont matérialisés ici par les écrous 410 de la Fig. 4 et prennent en sandwich la palette 254 et le panneau latéral 124.

Le système de fixation arrière 204 comporte également, pour chaque passage traversant avant 404, un boulon avant 238 avec un écrou 238a qui loge dans le perçage secondaire avant 232 et une vis 238b qui traverse successivement le perçage 258, l'alésage secondaire 240 et le passage traversant avant 404 pour se visser dans l'écrou 238a en prenant en sandwich la base 252, le longeron supérieur 120 et la poutre avant 202.

Dans le mode de réalisation de l'invention présenté ici, chaque perçage secondaire avant 232 présente une section circulaire et chaque écrou 238a présente un profil en D.

Dans un autre mode de réalisation, chaque perçage secondaire avant 232 peut présenter une section rectangulaire et chaque écrou 238a présente alors un profil classique hexagonal ou carré. Une telle implantation avec des boulons avant 238 et arrière 218 disposés symétriquement par rapport au plan médian XZ, permet en outre d'utiliser des mâts d'accrochage 110 qui sont identiques à bâbord et à tribord de l'aéronef 10.

La Fig. 3 montre une étape d'assemblage qui consiste à fixer les deux systèmes de fixation 202 et 204 au caisson de voilure avec les goupilles de cisaillement 234 et 214 orientées vers le bas, à fixer les équerres 250 contre les panneaux latéraux 124 à l'aide d'éléments de fixation (410), puis à soulever le mât d'accrochage 110 pour mettre en place les boulons avant 238 et arrière 218.

Les boulons avant 238 et arrière 218 sont ainsi accessibles depuis l'extérieur facilitant ainsi le contrôle au sol et la maintenance.

## Revendications

1. Ensemble (100) pour un aéronef (10), ledit ensemble (100) comportant :
- une aile (102) comprenant des longerons inférieurs (402, 502),
- un mât d'accrochage (110) agencé sous l'aile (102) et comportant une structure primaire (112) en forme de caisson primaire présentant un longeron supérieur (120) et deux panneaux latéraux (124) disposés symétriquement de part et d'autre d'un plan médian XZ,
- un système de fixation avant (202) et un système de fixation arrière (204), ledit ensemble (100) étant **caractérisé en ce que** ledit système de fixation avant (202) comporte :
- une poutre avant (226) fixée au longeron inférieur (402), où la poutre avant (226) est percée d'un alésage principal avant (230) orienté verticalement, où la poutre avant (226) est percée de deux perçages secondaires avant (232) orientés parallèlement à une direction longitudinale X et disposés symétriquement de part et d'autre du plan médian XZ, où de chaque perçage secondaire avant (232), s'étend au moins un passage traversant avant (404) orienté verticalement,
- un alésage supérieur avant (236) traversant le longeron supérieur (120) et orienté verticalement et coaxial avec l'alésage principal avant (230),
- une goupille de cisaillement avant (234) positionnée dans l'alésage supérieur avant (236) et dans l'alésage principal avant (230),
- pour chaque passage traversant avant (404), un alésage secondaire avant (240) traversant le longeron supérieur (120) et orienté verticalement et coaxial avec le passage traversant avant (404),
- deux équerres (250) disposées symétriquement de part et d'autre du plan médian XZ, où chaque équerre (250) comporte une base (252) et une palette (254) solidaire de la base (252), où la base (252) présente une face supérieure (256) qui s'applique sous le longeron supérieur (120), où pour chaque passage traversant avant (404), la base (252) est percée d'un perçage (258) la traversant et orienté verticalement, et où chaque perçage (258) débouche au niveau de la face supérieure (256) et est coaxial avec le passage traversant avant (404), où la palette (254) est fixée contre et à l'extérieur d'un panneau latéral (124), et
- pour chaque passage traversant avant (404), un boulon avant (238) avec un écrou (238a) qui loge dans le perçage secondaire avant (232) et une vis (238b) qui traverse successivement le perçage (258), l'alésage secondaire (240) et le passage traversant avant (404) pour se visser dans l'écrou (238a), et
**en ce que** ledit système de fixation arrière (204) comporte :
- une poutre arrière (206) fixée au longeron inférieur (502), où la poutre arrière (206) est percée d'un alésage principal arrière (210) orienté verticalement, où la poutre arrière (206) est percée de deux perçages secondaires arrière (212) orientés parallèlement à la direction longitudinale X et disposés symétriquement de part et d'autre du plan médian XZ, où de chaque perçage secondaire arrière (212) s'étend au moins un passage traversant arrière (504) orienté verticalement,
- un alésage supérieur arrière (216) qui traverse le longeron supérieur (120) et orienté verticalement et coaxial avec l'alésage principal arrière (210),
- une goupille de cisaillement arrière (214) positionnée dans l'alésage supérieur arrière (216) et dans l'alésage principal arrière (210),
- pour chaque passage traversant arrière (504), un alésage secondaire arrière (220) traversant le longeron supérieur (120) et orienté verticalement et coaxial avec le passage traversant arrière (504),
- pour chaque passage traversant arrière (504), un boulon arrière (218) avec un écrou (218a) qui loge dans le perçage secondaire arrière (212) et une vis (218b) qui traverse successivement l'alésage secondaire arrière (220) et le passage traversant arrière (504) pour se visser dans l'écrou (218a).

2. Ensemble (100) selon la revendication 1, **caractérisé en ce que** chaque perçage secondaire (212, 232) présente une section circulaire et chaque écrou (218a, 238a) présente un profil en D.

3. Ensemble (100) selon l'une des revendications 1 ou 2, **caractérisé en ce que** la structure primaire (112) comporte une nervure de fermeture arrière (126), **en ce que** chaque alésage secondaire arrière (220) traverse la nervure de fermeture arrière (126), et **en ce que** l'alésage supérieur arrière (216) traverse la nervure de fermeture arrière (126).

4. Aéronef (10) comportant au moins un ensemble (100) selon l'une des revendications précédentes.

## Patentansprüche

1. Baugruppe (100) für ein Luftfahrzeug (10), wobei die Baugruppe (100) aufweist:
- einen Flügel (102), der untere Holme (402, 502) enthält,
- eine Aufhängungsstrebe (110), die unter dem Flügel (102) angeordnet ist und eine Primärstruktur (112) in Form eines Primärkastens aufweist, der einen oberen Holm (120) und zwei Seitenplatten (124) aufweist, die symmetrisch zu beiden Seiten einer Mittelebene XZ angeordnet sind,
- ein vorderes Befestigungssystem (202) und ein hinteres Befestigungssystem (204),
wobei die Baugruppe (100) **dadurch gekennzeichnet ist, dass** das vordere Befestigungssystem (202) aufweist:
- einen vorderen Träger (226), der am unteren Holm (402) befestigt ist, wobei der vordere Träger (226) eine senkrecht ausgerichtete vordere Hauptausbohrung (230) aufweist, wobei der vordere Träger (226) zwei vordere Sekundärbohrungen (232) aufweist, die parallel zu einer Längsrichtung X ausgerichtet und symmetrisch zu beiden Seiten der Mittelebene XZ angeordnet sind, wobei sich von jeder vorderen Sekundärbohrung (232) mindestens ein senkrecht ausgerichteter vorderer Durchlassdurchgang (404) erstreckt,
- eine vordere obere Ausbohrung (236), die den oberen Holm (120) durchquert und senkrecht ausgerichtet und koaxial mit der vorderen Hauptausbohrung (230) ist,
- einen vorderen Scherstift (234), der in der vorderen oberen Ausbohrung (236) und in der vorderen Hauptausbohrung (230) positioniert ist,
- für jeden vorderen Durchlassdurchgang (404) eine vordere Sekundärausbohrung (240), die den oberen Holm (120) durchquert und senkrecht ausgerichtet und koaxial mit dem vorderen Durchlassdurchgang (404) ist,
- zwei Winkel (250), die symmetrisch zu beiden Seiten der Mittelebene XZ angeordnet sind, wobei jeder Winkel (250) einen Fuß (252) und einen fest mit dem Fuß (252) verbundenen Flügel (254) aufweist, wobei der Fuß (252) eine Oberseite (256) aufweist, die sich unter den oberen Holm (120) anlegt, wobei für jeden vorderen Durchlassdurchgang (404) der Fuß (252) von einer Bohrung (258) durchbohrt ist, die ihn durchquert und senkrecht ausgerichtet ist, und wobei jede Bohrung (258) im Bereich der Oberseite (256) mündet und mit dem vorderen Durchlassdurchgang (404) koaxial ist, wobei der Flügel (254) gegen eine und außerhalb einer Seitenplatte (124) befestigt ist, und
- für jeden vorderen Durchlassdurchgang (404) einen vorderen Bolzen (238) mit einer Mutter (238a), die in der vorderen Sekundärbohrung (232) untergebracht ist, und einer Schraube (238b), die nacheinander die Bohrung (258), die Sekundärausbohrung (240) und den vorderen Durchlassdurchgang (404) durchquert, um sich in die Mutter (238a) zu schrauben,
und dass das hintere Befestigungssystem (204) aufweist:
- einen am unteren Holm (502) befestigten hinteren Träger (206), wobei der hintere Träger (206) von einer senkrecht ausgerichteten hinteren Hauptausbohrung (210) durchbohrt wird, wobei der hintere Träger (206) von zwei hinteren Sekundärbohrungen (212) durchbohrt wird, die parallel zur Längsrichtung X ausgerichtet und symmetrisch zu beiden Seiten der Mittelebene XZ angeordnet sind, wobei sich von jeder hinteren Sekundärbohrung (212) mindestens ein senkrecht ausgerichteter hinterer Durchlassdurchgang (504) erstreckt,
- eine hintere obere Ausbohrung (216), die den oberen Holm (120) durchquert und senkrecht ausgerichtet und koaxial mit der hinteren Hauptausbohrung (210) ist,
- einen hinteren Scherstift (214), der in der hinteren oberen Ausbohrung (216) und in der hinteren Hauptausbohrung (210) positioniert ist,
- für jeden hinteren Durchlassdurchgang (504) eine hintere Sekundärausbohrung (220), die den oberen Holm (120) durchquert und senkrecht ausgerichtet und koaxial mit dem hinteren Durchlassdurchgang (504) ist,
- für jeden hinteren Durchlassdurchgang (504) einen hinteren Bolzen (218) mit einer Mutter (218a), die in der hinteren Sekundärbohrung (212) untergebracht ist, und einer Schraube (218b), die nacheinander die hintere Sekundärausbohrung (220) und den hinteren Durchlassdurchgang (504) durchquert, um sich in die Mutter (218a) zu schrauben.

2. Baugruppe (100) nach Anspruch 1, **dadurch gekennzeichnet, dass** jede Sekundärbohrung (212, 232) einen kreisförmigen Querschnitt aufweist und jede Mutter (218a, 238a) ein D-förmiges Profil aufweist.

3. Baugruppe (100) nach einem der Ansprüche 1 oder 2, **dadurch gekennzeichnet, dass** die Primärstruktur (112) eine hintere Schließrippe (126) aufweist, dass jede hintere Sekundärausbohrung (220) die hintere Schließrippe (126) durchquert, und dass die die hintere obere Ausbohrung (216) die hintere Schließrippe (126) durchquert.

4. Luftfahrzeug (10), das mindestens eine Baugruppe (100) nach einem der vorhergehenden Ansprüche aufweist.

## Claims

1. Assembly (100) for an aircraft (10), said assembly (100) having:
- a wing (102) comprising lower spars (402, 502),
- an attachment pylon (110) arranged under the wing (102) and having a primary structure (112) in the form of a primary box having an upper spar (120) and two lateral panels (124) disposed symmetrically on either side of a median plane XZ,
- a front fastening system (202) and a rear fastening system (204), said assembly (100) being **characterized in that** said front fastening system (202) has:
- a front beam (226) fastened to the lower spar (402), wherein the front beam (226) is pierced with a vertically oriented principal front bore (230), wherein the front beam (226) is pierced with two secondary front holes (232) oriented parallel to a longitudinal direction X and disposed symmetrically on either side of the median plane XZ, wherein at least one vertically oriented front through-passage (404) extends from each secondary front hole (232),
- an upper front bore (236), which passes through the upper spar (120) and is oriented vertically and coaxial with the principal front bore (230),
- a front shear pin (234) positioned in the upper front bore (236) and in the principal front bore (230),
- for each front through-passage (404), a secondary front bore (240), which passes through the upper spar (120) and is oriented vertically and coaxial with the front through-passage (404),
- two brackets (250) disposed symmetrically on either side of the median plane XZ, wherein each bracket (250) has a base (252) and a blade (254) integral with the base (252), wherein the base (252) has an upper face (256), which is attached under the upper spar (120), wherein for each front through-passage (404) the base (252) is pierced with a hole (258) which passes through it and is oriented vertically, and wherein each hole (258) opens out at the upper face (256) and is coaxial with the front through-passage (404), wherein the blade (254) is fastened against and on the outside of a lateral panel (124), and,
- for each front through-passage (404), a front bolt (238) with a nut (238a), which is received in the secondary front hole (232), and a screw (238b) that successively passes through the hole (258), the secondary bore (240) and the front through-passage (404) in order to be screwed into the nut (238a), and
**in that** said rear fastening system (204) has:
- a rear beam (206) fastened to the lower spar (502), wherein the rear beam (206) is pierced with a vertically oriented principal rear bore (210), wherein the rear beam (206) is pierced with two secondary rear holes (212) oriented parallel to the longitudinal direction X and disposed symmetrically on either side of the median plane XZ, wherein at least one vertically oriented rear through-passage (504) extends from each secondary rear hole (212),
- an upper rear bore (216), which passes through the upper spar (120) and is oriented vertically and coaxial with the principal rear bore (210),
- a rear shear pin (214) positioned in the upper rear bore (216) and in the principal rear bore (210),
- for each rear through-passage (504), a secondary rear bore (220), which passes through the upper spar (120) and is oriented vertically and coaxial with the rear through-passage (504),
- for each rear through-passage (504), a rear bolt (218) with a nut (218a), which is received in the secondary rear hole (212), and a screw (218b) that successively passes through the secondary rear bore (220) and the rear through-passage (504) in order to be screwed into the nut (218a).

2. Assembly (100) according to Claim 1, **characterized in that** each secondary hole (212, 232) has a circular cross section and each nut (218a, 238a) has a D-shaped profile.

3. Assembly (100) according to either of Claims 1 and 2, **characterized in that** the primary structure (112) has a rear closure rib (126), **in that** each secondary rear bore (220) passes through the rear closure rib (126), and **in that** the upper rear bore (216) passes through the rear closure rib (126).

4. Aircraft (10) having at least one assembly (100) according to one of the preceding claims.
